# EUROPÄISCHE PATENTSCHRIFT

(11) **EP 1 116 820 B1**
(45) Veröffentlichungstag und Bekanntmachung des Hinweises auf die Patenterteilung: **12.01.2005**
(21) Anmeldenummer: 00121420.4
(22) Anmeldetag: 29.09.2000
(51) Int. Cl.: D21F 3/02, D21F 1/00, D21F 1/30

(54) **Verfahren zur Herstellung eines Formierbands**
Method for producing a forming band
Procédé pour la fabrication d'une bande de formation

(30) Priorität: 30.11.1999 DE 19957616
(43) Veröffentlichungstag der Anmeldung: 18.07.2001
(73) Patentinhaber: Voith Paper Patent GmbH, 89522 Heidenheim (DE)
(72) Erfinder: Grabscheid, Joachim, Dr., 89547 Gerstetten (DE); Matuschczyk, Uwe, 73312 Geislingen (DE); Schmidt-Rohr, Volker, 89522 Heidenheim (DE)

(56) Entgegenhaltungen:
- EP-A- 0 960 977
- DE-A- 4 125 279

## Beschreibung

Die Erfindung betrifft ein Verfahren zur Herstellung eines auf einer Seite mit Noppen, Spikes oder dergleichen versehenen Formierbands zur Verwendung im Formierbereich einer Maschine zur Herstellung einer Faserstoffbahn wie insbesondere einer Papier-, Karton-, Tissue- und/oder Vliesbahn.

Formierbänder sind hinsichtlich ihrer Funktion den Preßmänteln ähnlich. Auch sie sollen bei ausreichender Festigkeit flexibel und flüssigkeitsdicht sein. Ein wesentlicher Unterschied gegenüber den Preßmänteln besteht darin, daß Formierbänder in der Regel eine relativ große offene Fläche von etwa 75 % bei gleichzeitig hohem Speichervolumen besitzen.

Prinzipiell könnte ein Formierband somit analog dem in der DE-C2-41 25 279 beschriebenen Verfahren zur Herstellung eines Preßmantels hergestellt werden. Als problematisch hat sich hierbei allerdings das Rotationsgießen einer zum Beispiel etwa 20 mm dicken Elastomerschicht über der Fadenverstärkung erwiesen. Zudem muß anschließend der größte Teil der aufgegossenen Masse wieder mechanisch abgetragen werden, um die erforderlichen Noppen oder Rillen zu erzeugen. Dieser Arbeitsschritt ist aufwendig und kostenintensiv. Zugleich ist er mit einem hohen Ausschuß behaftet.

Ziel der Erfindung ist es, ein Verfahren der eingangs genannten Art anzugeben, das eine möglichst wirtschaftliche Herstellung von Formierbändern gestattet.

Diese Aufgabe wird nach der Erfindung dadurch gelöst, daß im Gießverfahren eine Polymermatrix erzeugt wird und vorgefertigte Noppen beziehungsweise Spikes während des Gießvorgangs in das noch nicht erstarrte Matrixmaterial eingebracht werden.

Die Noppen, Spikes oder dergleichen werden somit nicht mehr mechanisch aus der Polymermatrix herausgearbeitet, sondern in vorgefertigter Form mit der Matrix verbunden.

Vorteilhafterweise werden die Polymermatrix auf einem Zylinder erzeugt und die Noppen beziehungsweise Spikes in das auf den Zylinder aufgebrachte Matrixmaterial eingebracht.

Während des Gießvorgangs kann eine vorzugsweise Längs- und Umfangsfäden umfassende Verstärkung in das Matrixmaterial eingebracht werden.

Hinsichtlich der Kräfteaufnahme und den Dehnungsverhältnissen der Polymermatrix ist es von Vorteil, wenn die Längsfäden an der Innenseite der Polymermatrix und wenn die Umfangsfäden über die Längsfäden gewickelt werden.

Bevorzugterweise werden die Umfangsfäden direkt über die Längsfäden gewickelt werden, da man hierbei die Polymermatrix so dünn wie möglich ausgestalten kann.

Weiterhin ist es unter fertigungstechnischen Aspekten von Vorteil, wenn die Umfangsfäden in einer Schraubenlinie, vorzugsweise unter einem Winkel kleiner 1 Grad zur Senkrechten der Längsfäden, über die Längsfäden gewickelt werden.

Damit die Längsfäden im Falle einer Beschädigung der Innenseite der Polymermatrix nicht sofort beschädigt oder sogar durchtrennt werden, werden die Längsfäden mit einem Abstand von 0,5 mm bis 1,5 mm, vorzugsweise von 0,8 mm bis 1,2 mm, von der Innenseite der Polymermatrix gewickelt.

Hinsichtlich der auf die Polymermatrix wirkende Beanspruchung ist es vorteilhaft, wenn die Längsfäden achsparallel, vorzugsweise in Hauptachsenrichtung der Beanspruchung, gewickelt werden.

Bevorzugterweise werden die Längsfäden in einem gegenseitigen Abstand von 2 mm bis 4 mm, vorzugsweise von etwa 3 mm, und die Umfangsfäden in einem gegenseitigen Abstand von 1,5 mm bis 3 mm, vorzugsweise von 2,2 mm, gewickelt, da hierbei eine höhere Festigkeit in Umfangsrichtung von ca. 20 bis 30 % mehr zu erwarten ist. Diese höhere Festigkeit ist notwendig, da in Umfangsrichtung im allgemeinen die höheren Belastungen im Betrieb auftreten und die Längsfäden lediglich die Querdehnung der Polymermatrix verhindern.

Sowohl unter fertigungstechnischen, festigkeitstechnischen als auch betriebswirtschaftlichen Kriterien ist es günstig, wenn die Längsfäden und/oder die Umfangsfäden aus einem endlosen Material hergestellt werden.

Bei einer bevorzugten praktischen Ausgestaltung des erfindungsgemäßen Verfahrens werden die Noppen beziehungsweise Spikes in einem vorhergehenden Fertigungsschritt auf einem Trägerband befestigt und anschließend zusammen mit diesem Trägerband in das noch nicht erstarrte Matrixmaterial eingebracht. Dabei schwimmt das Trägerband auf der noch flüssigen Matrix auf, so daß die Noppen, Spikes oder dergleichen nach dem Erstarren des Matrixmaterials aus der Matrix herausragen. Wird die Polymermatrix auf einem Zylinder erzeugt, so kann das Trägerband während des Gießvorgangs mit eingewickelt werden.

Das mit den Noppen beziehungsweise Spikes versehene Trägerband wird vorzugsweise durch mechanischen Formschluß und/oder eine chemische Vernetzung über einen Haftvermittler in der Polymermatrix verankert.

Vorteilhafterweise wird ein aus einem Gewebe oder Vlies bestehendes Trägerband verwendet.

In bestimmten Fällen ist es von Vorteil, ein gleichzeitig mit Umfangsfäden versehenes Trägerband zu verwenden.

Die Noppen beziehungsweise Spikes können insbesondere in eine noch nicht erstarrte Außenschicht der Polymermatrix beziehungsweise noch flüssige, reaktive Beschichtung eingebracht werden.

In bestimmten Fällen kann es auch von Vorteil sein, wenn die Noppen beziehungsweise Spikes beim Einbetten in die Polymermatrix zusätzlich mit Polymer übergossen beziehungsweise beschichtet werden, wodurch die Verschleißfestigkeit erhöht wird.

Die Polymermatrix kann beispielsweise durch ein Elastomer wie insbesondere Gummi oder Polyurethan gebildet werden.

Als Verstärkung werden zweckmäßigerweise aus Polyester oder dergleichen bestehende Längs- und/oder Umfangsfäden verwendet.

Die Noppen beziehungsweise Spikes können beispielsweise aus einem polymeren Werkstoff wie insbesondere Polyamid oder Polyurethan, aus Gummi, oder aus Edelstahl bestehen.

Gemäß einer zweckmäßigen Ausgestaltung werden Noppen beziehungsweise Spikes verwendet, die aus kurzfaserverstärktem Werkstoff bestehen.

Im übrigen kann das Verfahren insbesondere so ausgestaltet sein, wie sich dies aus der mit der Herstellung eines Preßmantels befassten DE-C2-41 25 279 ergibt,

Die Erfindung wird im folgenden anhand von Ausführungsbeispielen unter Bezugnahme auf die Zeichnung näher erläutert; in dieser zeigen:
- Figur 1: eine schematische, teilweise geschnittene Seitenansicht einer Vorrichtung zur Herstellung eines auf einer Seite mit Noppen, Spikes oder dergleichen versehenen Formierbandes;
- Figur 2: einen schematischen Querschnitt durch ein fertiggestelltes Formierband; und
- Figur 3: eine schematische Draufsicht auf die Polymermatrix.

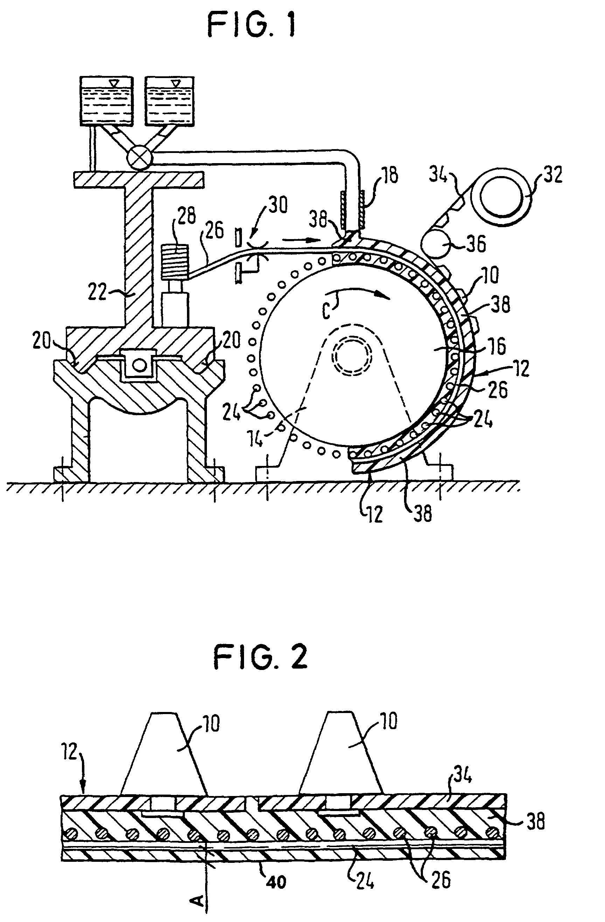

Die Figur 1 zeigt in schematischer, teilweise geschnittener Seitenansicht eine mögliche Vorrichtung zur Herstellung eines auf einer Seite mit Noppen 10 versehenen Formierbands 12, das im Formierbereich einer Maschine zur Herstellung einer Faserstoffbahn wie insbesondere einer Papier-, Karton-, Tissue- und/oder Vliesbahn verwendbar ist.

Die Vorrichtung umfaßt einen an Lagerschildern 14 drehbar gelagerten Gießzylinder 16, eine im Umfangsbereich des Gießzylinders 16 vorgesehene obere Gießdüse 18 sowie einen in Führungsschienen 20 parallel zum Gießzylinder 16 verfahrbaren Support 22, mit dem die Gießdüse 18 längs des Gießzylinders 16 verfahrbar ist. Der Gießzylinder 16 wird im vorliegenden Fall in Richtung des Pfeils C angetrieben.

Über den gesamten Umfang des Gießzylinders 16 verteilt werden im gleichmäßigen Abstand zueinander Längsfäden 24 aufgespannt. Diese Längsfäden 24 liegen parallel zueinander und bilden somit eine koaxiale Käfiganordnung über den Umfang des Gießzylinders 16.

An einer Stirnseite des Gießzylinders 16 wird dann der Anfang eines Umfangfadens 26 fixiert, der von einer am Support 22 gelagerten Vorratsspule 28 abgewickelt und nach erfolgtem Aufwickeln mittels einer Trenneinrichtung 30 durchtrennt wird.

Insoweit besitzt diese Vorrichtung den gleichen Aufbau wie die in der DE-C2-41 25 279 beschriebene Vorrichtung zur Herstellung eines Preßmantels.

Zur erfindungsgemäßen Herstellung eines mit Noppen 10, Spikes oder dergleichen versehenen Formierbands 12 umfaßt die in der Figur 1 dargestellte Ausführungsform einer geeigneten Vorrichtung überdies eine Vorratsspule 32 für ein mit Noppen 10 versehenes Trägerband 34. Dieses Trägerband 34 wird bei sich in Richtung des Pfeils C drehendem Gießzylinder 16 von der Vorratsspule 32 abgewickelt und über eine Umlenkwalze 36 in der weiter unten näher beschriebenen Weise auf das über die Gießdüse 18 auf den Gießzylinder 16 aufgebrachte, noch nicht erstarrte Matrixmaterial 38 aufgebracht.

Die in der Figur 1 dargestellte Vorrichtung unterscheidet sich somit durch die Vorratsspule 32 für das mit Noppen 10 versehene Trägerband 34 und die Umlenkwalze 36, über die das Trägerband 34 dem Gießzylinder 16 zugeführt wird, von der in der DE-C2-41 25 279 beschriebenen Vorrichtung.

Die Noppen 10 (Spikes oder dergleichen) werden somit nicht mechanisch aus der Polymermatrix herausgearbeitet, sondern in vorgefertigter Form mit der Matrix verbunden.

Im vorliegenden Fall werden diese Noppen 10 in einem separaten Fertigungsschritt auf dem relativ schmalen Trägerband 34 aufgebracht, bei dem es sich beispielsweise um ein Gewebeband handeln kann. Dieses mit Noppen 10 versehene Trägerband 34 wird dann während des Gießvorgangs ähnlich wie die Umfangsfäden 26 der noch flüssigen Polymermatrix zugeführt. Dabei kommt es zu einem mechanischen Formschluß des Trägerbandgewebes mit dem Polymer. Denkbar ist zusätzlich die Verwendung eines entsprechenden Haftvermittlers für eine zusätzliche chemische Bindung.

Im Gegensatz zu den Umfangsfäden 26 schwimmt das Trägerband 34 auf der noch flüssigen Matrix auf, so daß die Noppen 10 schließlich aus der erstarrten Matrix herausragen.

Die die Längs- und Umfangsfäden 24, 26 umfassende Verstärkung wird während des Gießvorgangs in das Matrixmaterial 38 eingebracht. Die Polymermatrix wird auf dem Gießzylinder 16 erzeugt, wobei das Trägerband 34 während des Gießvorgangs mit eingewickelt wird. Dabei werden die auf dem Trägerband 34 angeordneten Noppen 10 in die noch flüssige, reaktive Beschichtung eingebracht.

Figur 2 zeigt in einer schematischen Querschnittsdarstellung das fertiggestellte Formierband 12. Dabei ist auch die vollständig in die Polymermatrix 38 eingebettete Verstärkung aus den Längs- und Umfangsfäden 24, 26, die aus einem endlosen Material hergestellt sind, zu erkennen, wobei die Längsfäden 24 an der Innenseite 40 der Polymermatrix 38 gewickelt sind und die Umfangsfäden 26 über, vorzugsweise direkt über den Längsfäden 24 gewickelt sind. Weiterhin sind Längsfäden 24 mit einem Abstand A von 0,5 mm bis 1,5 mm, vorzugsweise von 0,8 mm bis 1,2 mm, von der Innenseite 40 der Polymermatrix 38 gewickelt. Das Trägerband 34 ist durch einen mechanischen Formschluß und/oder eine chemische Vernetzung über einen Haftvermittler in einer Außenschicht der Polymermatrix 38 verankert. Die Noppen 10 stehen von der Polymermatrix 38 ab. Die Noppen 10 können beim Einbetten in die Polymermatrix zusätzlich mit Polymer übergossen werden, wodurch die Verschleißfestigkeit erhöht wird.

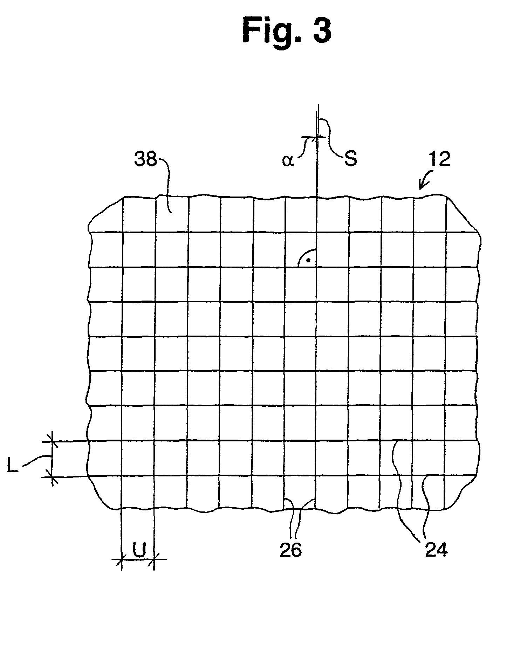

Figur 3 zeigt eine schematische Draufsicht auf die Polymermatrix 38 des Formierbands 12. Die Längsfäden 24 sind in einem gegenseitigen Abstand L von 2 mm bis 4 mm, vorzugsweise von etwa 3 mm, achsparallel, vorzugsweise in Hauptachsenrichtung der Beanspruchung, gewickelt, wohingegen die Umfangsfäden 26 in einem gegenseitigen Abstand U von 1,5 mm bis 3 mm, vorzugsweise von 2,2 mm, in einer Schraubenlinie, vorzugsweise unter einem Winkel a kleiner 1 Grad zur Senkrechten S der Längsfäden 24, über die Längsfäden 24 gewickelt sind.

Im übrigen können das Verfahren und die betreffende Vorrichtung beispielsweise so ausgestaltet sein, wie dies in der mit der Herstellung von Preßmänteln befassten DE-C2-41 25 279 beschrieben ist.

### Bezugszeichenliste

- 10: Noppen, Spikes
- 12: Formierband
- 14: Lagerschild
- 16: Gießzylinder
- 18: Gießdüse
- 20: Führungsschiene
- 22: Support
- 24: Längsfaden
- 26: Umfangsfaden
- 28: Vorratsspule
- 30: Trenneinrichtung
- 32: Vorratsspule
- 34: Trägerband
- 36: Umlenkwalze
- 38: Matrixmaterial, Polymermatrix
- 40: Innenseite

- A, L, U: Abstand
- C: Drehrichtung
- S: Senkrechte
- α: Winkel

## Patentansprüche

1. Verfahren zur Herstellung eines auf einer Seite mit Noppen (10), Spikes oder dergleichen versehenen Formierbands (12) zur Verwendung im Formierbereich einer Maschine zur Herstellung einer Faserstoffbahn wie insbesondere einer Papier-, Karton-, Tissue- und/oder Vliesbahn,
**dadurch gekennzeichnet,**
**daß** im Gießverfahren eine Polymermatrix (38) erzeugt wird und vorgefertigte Noppen (10) beziehungsweise Spikes während des Gießvorgangs in das noch nicht erstarrte Matrixmaterial (38) eingebracht werden.

2. Verfahren nach Anspruch 1,
**dadurch gekennzeichnet,**
**daß** die Polymermatrix (38) auf einem Zylinder (16) erzeugt und die Noppen (10) beziehungsweise Spikes in das auf den Zylinder (16) aufgebrachte Matrixmaterial (38) eingebracht werden.

3. Verfahren nach Anspruch 1 oder 2,
**dadurch gekennzeichnet,**
**daß** während des Gießvorgangs eine vorzugsweise Längs- und Umfangsfäden (24, 26) umfassende Verstärkung in das Matrixmaterial (38) eingebracht wird.

4. Verfahren nach Anspruch 3,
**dadurch gekennzeichnet,**
**daß** die Längsfäden (24) an der Innenseite (40) der Polymermatrix (38) und daß die Umfangsfäden (26) über die Längsfäden (24) gewickelt werden.

5. Verfahren nach Anspruch 4,
**dadurch gekennzeichnet,**
**daß** die Umfangsfäden (26) direkt über die Längsfäden (24) gewickelt werden.

6. Verfahren nach Anspruch 3 oder 4,
**dadurch gekennzeichnet,**
**daß** die Umfangsfäden (26) in einer Schraubenlinie, vorzugsweise unter einem Winkel (a) kleiner 1 Grad zur Senkrechten (S) der Längsfäden (24), über die Längsfäden (24) gewickelt werden.

7. Verfahren nach einem der vorhergehenden Ansprüche 3 bis 6,
**dadurch gekennzeichnet,**
**daß** die Längsfäden (24) mit einem Abstand (A) von 0,5 mm bis 1,5 mm, vorzugsweise von 0,8 mm bis 1,2 mm, von der Innenseite (40) der Polymermatrix (38) gewickelt werden.

8. Verfahren nach einem der vorhergehenden Ansprüche 3 bis 7,
**dadurch gekennzeichnet,**
**daß** die Längsfäden (24) achsparallel, vorzugsweise in Hauptachsenrichtung der Beanspruchung, gewickelt werden.

9. Verfahren nach einem der vorhergehenden Ansprüche 3 bis 8,
**dadurch gekennzeichnet,**
**daß** die Längsfäden (24) in einem gegenseitigen Abstand (L) von 2 mm bis 4 mm, vorzugsweise von etwa 3 mm, und die Umfangsfäden (26) in einem gegenseitigen Abstand (U) von 1,5 mm bis 3 mm, vorzugsweise von 2,2 mm, gewickelt werden.

10. Verfahren nach einem der vorhergehenden Ansprüche 3 bis 9,
**dadurch gekennzeichnet,**
**daß** die Längsfäden (24) und/oder die Umfangsfäden (26) aus einem endlosen Material hergestellt werden.

11. Verfahren nach einem der vorhergehenden Ansprüche,
**dadurch gekennzeichnet,**
**daß** die Noppen (10) beziehungsweise Spikes in einem vorhergehenden Fertigungsschritt auf einem Trägerband (34) befestigt und anschließend zusammen mit diesem Trägerband (34) in das noch nicht erstarrte Matrixmaterial (38) eingebracht werden.

12. Verfahren nach Anspruch 11,
**dadurch gekennzeichnet,**
**daß** die Polymermatrix (38) auf einem Zylinder (16) erzeugt und das Trägerband (34) während des Gießvorgangs mit eingewickelt wird.

13. Verfahren nach einem der Ansprüche 11 oder 12,
**dadurch gekennzeichnet,**
**daß** das mit den Noppen (10) beziehungsweise Spikes versehene Trägerband (34) durch mechanischen Formschluß und/oder eine chemische Vernetzung über einen Haftvermittler in der Polymermatrix (38) verankert wird.

14. Verfahren nach einem der Ansprüche 11-13,
**dadurch gekennzeichnet,**
**daß** ein aus einem Gewebe oder Vlies bestehendes Trägerband (34) verwendet wird.

15. Verfahren nach einem der Ansprüche 11-14,
**dadurch gekennzeichnet,**
**daß** ein gleichzeitig mit Umfangsfäden versehenes Trägerband (34) verwendet wird.

16. Verfahren nach einem der vorhergehenden Ansprüche,
**dadurch gekennzeichnet,**
**daß** die Noppen (10) beziehungsweise Spikes in eine noch nicht erstarrte Außenschicht der Polymermatrix (38) eingebracht werden.

17. Verfahren nach einem der vorhergehenden Ansprüche,
**dadurch gekennzeichnet,**
**daß** die Noppen (10) beziehungsweise Spikes beim Einbetten in die Polymermatrix (38) zusätzlich mit Polymer übergossen werden.

18. Verfahren nach einem der vorhergehenden Ansprüche,
**dadurch gekennzeichnet,**
**daß** die Polymermatrix (38) durch ein Elastomer wie insbesondere Gummi oder Polyurethan gebildet wird.

19. Verfahren nach einem der vorhergehenden Ansprüche,
**dadurch gekennzeichnet,**
**daß** als Verstärkung aus Polyester oder dergleichen bestehende Längsund/oder Umfangsfäden (24, 26) verwendet werden.

20. Verfahren nach einem der vorhergehenden Ansprüche,
**dadurch gekennzeichnet,**
**daß** Noppen (10) beziehungsweise Spikes verwendet werden, die aus einem polymeren Werkstoff wie insbesondere Polyamid oder Polyurethan, aus Gummi, oder aus Edelstahl bestehen.

21. Verfahren nach einem der vorhergehenden Ansprüche,
**dadurch gekennzeichnet,**
**daß** Noppen (10) beziehungsweise Spikes verwendet werden, die aus kurzfaserverstärktem Werkstoff bestehen.

## Claims

1. Method for producing a forming band (12) provided on one side with studs (10), spikes or the like for use in the forming area of a machine for producing a fibrous web, such as in particular a paper, board, tissue and/or nonwoven web,
**characterized in that** a polymer matrix (38) is produced in the casting process and prefabricated studs (10) or spikes are introduced into the not yet solidified matrix material (38) during the casting procedure.

2. Method according to Claim 1, **characterized in that** the polymer matrix (38) is produced on a cylinder (16) and the studs (10) or spikes are introduced into the matrix material (38) applied to the cylinder (16).

3. Method according to Claim 1 or 2, **characterized in that**, during the casting procedure, a reinforcement preferably comprising longitudinal and circumferential filaments (24, 26) is introduced into the matrix material (38).

4. Method according to Claim 3, **characterized in that** the longitudinal filaments (24) are wound on the inner side (40) of the polymer matrix (38) and **in that** the circumferential filaments (26) are wound over the longitudinal filaments (24).

5. Method according to Claim 4, **characterized in that** the circumferential filaments (26) are wound directly over the longitudinal filaments (24).

6. Method according to Claim 3 or 4, **characterized in that** the circumferential filaments (26) are wound over the longitudinal filaments (24) in a helix, preferably at an angle (α) of less than 1 degree with respect to the vertical (S) of the longitudinal filaments (24).

7. Method according to one of the preceding Claims 3 to 6, **characterized in that** the longitudinal filaments (24) are wound with a spacing (A) of 0.5 mm to 1.5 mm, preferably of 0.8 mm to 1.2 mm, from the inner side (40) of the polymer matrix (38).

8. Method according to one of the preceding Claims 3 to 7, **characterized in that** the longitudinal filaments (24) are wound in an axially parallel manner, preferably in the direction of the main axis of the stress.

9. Method according to one of the preceding Claims 3 to 8, **characterized in that** the longitudinal filaments (24) are wound with a mutual spacing (L) of 2 mm to 4 mm, preferably of about 3 mm, and the circumferential filaments (26) are wound with a mutual spacing (U) of 1.5 mm to 3 mm, preferably of 2.2 mm.

10. Method according to one of the preceding Claims 3 to 9, **characterized in that** the longitudinal filaments (24) and/or the circumferential filaments (26) are produced from an endless material.

11. Method according to one of the preceding claims, **characterized in that** the studs (10) or spikes are fixed to a carrier band (34) in a preceding fabrication step and then, together with this carrier band (34), are introduced into the not yet solidified matrix material (38).

12. Method according to Claim 11, **characterized in that** the polymer matrix (38) is produced on a cylinder (16) and the carrier band (34) is wound in as well during the casting procedure.

13. Method according to either of Claims 11 and 12, **characterized in that** the carrier band (34) provided with the studs (10) or spikes is anchored in the polymer matrix (38) by means of a mechanical form fit and/or chemical cross-linking via an adhesion promoter.

14. Method according to one of Claims 11-13, **characterized in that** use is made of a carrier band (34) consisting of a fabric or nonwoven.

15. Method according to one of Claims 11-14, **characterized in that** use is made of a carrier band (34) simultaneously provided with circumferential filaments.

16. Method according to one of the preceding claims, **characterized in that** the studs (10) or spikes are introduced into a not yet solidified outer layer of the polymer matrix (38).

17. Method according to one of the preceding claims, **characterized in that** the studs (10) or spikes additionally have polymer cast over them as they are embedded in the polymer matrix (38).

18. Method according to one of the preceding claims, **characterized in that** the polymer matrix (38) is formed by an elastomer such as, in particular, rubber or polyurethane.

19. Method according to one of the preceding claims, **characterized in that** the reinforcement used is longitudinal and/or circumferential filaments (24, 26) consisting of polyester or the like.

20. Method according to one of the preceding claims, **characterized in that** use is made of studs (10) or spikes which consist of a polymer material such as, in particular, polyamide or polyurethane, of rubber or of stainless steel.

21. Method according to one of the preceding claims, **characterized in that** use is made of studs (10) or spikes which consist of short-fibre-reinforced material.

## Revendications

1. Procédé pour la fabrication d'une bande de formation (12) pourvue d'un côté de nopes (10), crampons ou similaires utilisable dans la zone de formage d'une machine pour la fabrication d'une bande de matière fibreuse, comme en particulier d'une bande de papier, carton, papier ménager et/ou non-tissé,
**caractérisé en ce**
**qu'**une matrice en polymère (38) est fabriquée dans le procédé de coulée et que lors du processus de coulée, des nopes (10) ou crampons préfabriqués sont intégrés dans le matériau matrice (38) non encore solidifié.

2. Procédé selon la revendication 1,
**caractérisé en ce**
**que** la matrice en polymère (38) est réalisée sur un cylindre (16) et que les nopes (10) ou crampons sont intégrés dans le matériau matrice (38) appliqué sur le cylindre (16).

3. Procédé selon la revendication 1 ou 2
**caractérisé en ce**
**que**, pendant le procédé de coulée, un renforcement comportant de préférence des fils longitudinaux ou circonférentiels (24, 26) est intégré dans le matériau matrice (38).

4. Procédé selon la revendication 3,
**caractérisé en ce**
**que** les fils longitudinaux (24) sont bobinés à la face intérieure (40) de la matrice en polymère (38) et que les fils circonférentiels (26) sont bobinés autour des fils longitudinaux (24).

5. Procédé selon la revendication 4,
**caractérisé en ce**
**que** les fils circonférentiels (26) son bobinés directement par-dessus les fils longitudinaux (24).

6. Procédé selon la revendication 3 ou 4,
**caractérisé en ce**
**que** les fils circonférentiels (26) sont bobinés en hélice par-dessus les fils longitudinaux (24), de préférence avec un angle (α) inférieur à 1 degré par rapport à la verticale (S) des fils longitudinaux (24).

7. Procédé selon l'une des revendications précédentes 3 à 6,
**caractérisé en ce**
**que** les fils longitudinaux (24) sont bobinés avec un écartement (A) de 0,5 mm à 1,5 mm, de préférence de 0,8 mm à 1,2 mm depuis la face intérieure (40) de la matrice en polymère (38).

8. Procédé selon l'une des revendications précédentes 3 à 7,
**caractérisé en ce**
**que** les fils longitudinaux (24) sont bobinés parallèlement à l'axe, de préférence dans le sens de l'axe principal de la sollicitation.

9. Procédé selon l'une des revendications précédentes 3 à 8,
**caractérisé en ce**
**que** les fils longitudinaux (24) sont bobinés avec un écartement (L) l'un par rapport à l'autre de 2 mm à 4 mm, de préférence d'environ 3 mm, et que les fils circonférentiels (26) sont bobinés avec un écartement (U) l'un par rapport à l'autre de 1,5 mm à 3 mm, de préférence de 2,2 mm.

10. Procédé selon l'une des revendications précédentes 3 à 9,
**caractérisé en ce**
**que** les fils longitudinaux (24) et/ou les fils circonférentiels (26) sont réalisés en un matériau sans fin.

11. Procédé selon l'une des revendications précédentes,
**caractérisé en ce**
**que** les nopes (10) ou crampons sont fixés dans un procédé de fabrication précédent sur une bande support (34) puis intégrés ensemble avec cette bande support (34) dans le matériau matrice (38) non encore solidifié.

12. Procédé selon la revendication 11,
**caractérisé en ce**
**que** la matrice en polymère (38) est fabriquée sur un cylindre (16) et que la bande support (34) est bobinée simultanément lors du processus de coulée.

13. Procédé selon l'une des revendications 11 ou 12,
**caractérisé en ce que**
la bande support (34) équipée des nopes (10) ou crampons est ancrée sur la matrice en polymère (38) par engagement positif mécanique et/ou une réticulation chimique grâce à un agent d'adhérence.

14. Procédé selon l'une des revendications 11 à 13,
**caractérisé en ce**
**qu'**une bande support (34) composée d'un tissage ou d'un non-tissé est utilisée.

15. Procédé selon l'une des revendications 11 à 14,
**caractérisé en ce**
**qu'**une bande support (34) équipée simultanément de fils circonférentiels est utilisée.

16. Procédé selon l'une des revendications précédentes,
**caractérisé en ce que**
les nopes (10) ou crampons sont intégrés dans une couche non encore solidifiée de la matrice en polymère (38).

17. Procédé selon l'une des revendications précédentes,
**caractérisé en ce**
**que** lors de l'intégration dans la matrice en polymère (38), les nopes (10) ou crampons reçoivent en plus une coulée de polymère.

18. Procédé selon l'une des revendications précédentes,
**caractérisé en ce**
**que** la matrice en polymère (38) est réalisée avec un élastomère, comme par exemple du caoutchouc ou polyuréthane.

19. Procédé selon l'une des revendications précédentes,
**caractérisé en ce**
**qu'**en renforcement, des fils longitudinaux et/ou circonférentiels (24, 26) composés de polyester ou similaire sont utilisés.

20. Procédé selon l'une des revendications précédentes,
**caractérisé en ce**
**qu'**on utilise des nopes (10) ou crampons composés d'un matériau polymère, en particulier du polyamide ou polyuréthane, en caoutchouc ou en acier inoxydable.

21. Procédé selon l'une des revendications précédentes,
**caractérisé en ce**
**qu'**on utilise des nopes (10) ou crampons composés d'un matériau renforcé en fibres courtes.
